# EUROPÄISCHE PATENTSCHRIFT

(11) **EP 1 589 056 B1**
(45) Veröffentlichungstag und Bekanntmachung des Hinweises auf die Patenterteilung: **15.11.2006**
(21) Anmeldenummer: 05008714.7
(22) Anmeldetag: 21.04.2005
(51) Int. Cl.: C08G 77/12

(54) **Verfahren zur Herstellung von linearen Si-H-Gruppen aufweisenden Organopolysiloxanen**
Process for the preparation of linear Si-H containing organopolysiloxanes
Procédé de préparation de polysiloxanes linéaires contenant des groupes Si-H

(30) Priorität: 21.04.2004 DE 102004019377
(43) Veröffentlichungstag der Anmeldung: 26.10.2005
(73) Patentinhaber: Wacker Chemie AG, 81737 München (DE)
(72) Erfinder: Geisberger, Gilbert Dr., 84503 Altötting (DE); Lindner, Tasssilo, Dr., 84561 Mehring-Öd (DE); Baumann, Frank, Dr., 84529 Tittmoning (DE)
(74) Vertreter: Fritz, Helmut

(56) Entgegenhaltungen:
- EP-A- 0 967 236
- EP-A- 1 247 811
- WO-A-96/18670
- US-B1- 6 232 423

## Beschreibung

Die Erfindung betrifft ein Verfahren zur Herstellung von linearen Diorganosiloxy-Einheiten und Si-H Gruppen aufweisenden Organopolysiloxanen aus Organochlorsilanen und Wasser.

EP 967236 A beschreibt die Herstellung von Hydrogenmethylpolysiloxanen mit Trimethylsilyl-Endgruppen in einem zweistufigen Verfahren aus Methyldichlorsilan, Trimethylchlorsilan und Wasser.

Die Herstellung von Hydrogenmethylsiloxy-Einheiten und Dimethylsiloxy-Einheiten aufweisenden Polysiloxanen mit Trimethylsilyl-Endgruppen über die Equilibrierung von Hydrogenmethylpolysiloxanen mit Dimethylpolysiloxanen unter Verwendung eines Equilibrierungskatalysators ist in WO 96/18670 beschrieben.

Der Erfindung liegt die Aufgabe zugrunde, ein vereinfachtes Verfahren zur Herstellung von linearen Di-Kohlenwasserstoffsiloxy-Einheiten und Si-H Gruppen aufweisenden Organopolysiloxanen bereitzustellen.

Gegenstand der Erfindung ist ein Verfahren zur Herstellung von Diorganosiloxy-Einheiten und Si-H Gruppen aufweisenden linearen Organopolysiloxanen (P), bei dem
in einem ersten Schritt Diorganodichlorsilane (A) und Monochlorsilane (B) und gegebenenfalls Dichlorsilane (C), wobei mindestens die Monochlorsilane (B) oder Dichlorsilane (C) Si-H Gruppen enthalten, mit höchstens 0,5 Mol Wasser je Mol hydrolysierbaren Chlors zu einem Teilhydrolysat (T) und gasförmigem Chlorwasserstoff umgesetzt werden und
in einem zweiten Schritt das Teilhydrolysat (T) zur Entfernung der noch vorhandenen SiCl-Gruppen mit Wasser unter Bildung von Salzsäure behandelt wird, wobei ein die Organopolysiloxane (P) enthaltendes Hydrolysat (H) anfällt.

Bei dem Verfahren werden direkt aus den Kohlenwasserstoffchlorsilanen die Organopolysiloxane (P) hergestellt. Die bisher notwendige zusätzliche Verfahrensstufe, die Equilibrierung von mindestens zwei unterschiedlichen Organopolysiloxanen entfällt.

Das Verfahren ist leicht zu steuern, die Bildung von Verzweigungen in den Organopolysiloxanen (P) tritt nicht auf, da die Wasserstoffabspaltung unterdrückt wird. Die Organopolysiloxane (P) neigen auch nicht zu Vergelungen. Ferner wird ein hoher Anteil des Chlors der Ausgangsstoffe als HCl-Gas gewonnen.

Das hydrolysierbare Chlor liegt in Form von SiCl-Gruppen vor. Vorzugsweise werden im ersten Schritt mindestens 0,3 mol Wasser je Mol hydrolysierbaren Chlors eingesetzt.

Die Diorganosiloxy-Einheiten und Si-H Gruppen aufweisenden linearen Organopolysiloxane (P) weisen vorzugsweise die allgemeine Formel 1

R₃SiO(SiR₂O)ₘ(SiR¹ ₂O)ₙSiR₃ (1),

auf, in der
- **R**: Wasserstoff oder einen gegebenenfalls mit Halogen- oder Cyanoresten substituierten Kohlenwasserstoffrest mit 1 bis 18 Kohlenstoffatomen,
- **R**^{**1**}: einen gegebenenfalls mit Halogen- oder Cyanoresten substituierten Kohlenwasserstoffrest mit 1 bis 18 Kohlenstoffatomen,
- **m**: ganzzahlige Werte von 0 bis 1000 und
- **n**: ganzzahlige Werte von 1 bis 1000 bedeuten,
mit der Massgabe, dass mindestens ein Rest **R** Wasserstoff bedeutet.

Die im ersten Schritt eingesetzten Diorganodichlorsilane (A) weisen vorzugsweise die allgemeine Formel 2

R¹ ₂SiCl₂ (2),

auf, in der **R**^{**1**} die vorstehenden Bedeutungen aufweist.

Die im ersten Schritt eingesetzten Monochlorsilane (B) weisen vorzugsweise die allgemeine Formel 3

R₃SiCl (3),

auf, in der **R** die vorstehenden Bedeutungen aufweist.

Die im ersten Schritt eingesetzten Dichlorsilane (C) weisen vorzugsweise die allgemeine Formel 4

R₂SiCl₂ (4),

auf, in der **R** die vorstehenden Bedeutungen aufweist.

Vorzugsweise bedeutet die Kohlenwasserstoffe **R** und **R**^{**1**} einen von ethylenisch oder acetylenisch ungesättigten Bindungen freien Kohlenwasserstoffrest mit 1 bis 18 Kohlenstoffatomen.

Beispiele für Kohlenwasserstoffreste **R** und **R**^{**1**} sind Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha-und der β-Phenylethylrest;

Beispiele für substituierte Kohlenwasserstoffreste **R und R**^{**1**} sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Bevorzugt handelt es sich bei den Resten **R** und **R**^{**1**} um einen Phenylrest oder linearen Alkylrest, insbesondere mit 1 bis 10, besonders 1 bis 6 Kohlenstoffatomen. Besonders bevorzugte Kohlenwasserstoffreste **R** und **R**^{**1**} sind n-Propyl-, Ethyl- und insbesondere Methylrest.

Vorzugsweise bedeutet **m** Werte von höchstens 200, insbesondere höchstens 50. Vorzugsweise bedeutet **n** Werte von höchstens 500, insbesondere höchstens 250.

Bevorzugte im ersten Schritt eingesetzte Gemische sind (Methyl=Me) :
Me₃SiCl/Me₂SiCl₂/MeSiHCl₂
Me₃SiCl/PropylMeSiCl₂/MeSiHCl₂
Me₃SiCl/Me₂SiCl_{2/}PhenylMeSiCl_{2/}MeSiHCl₂
Me₂SiHCl/Me₂SiCl₂
Me₂SiHCl/Me₂SiCl₂/MeSiHCl₂

Das erfindungsgemässe Verfahren ist hervorragend geeignet zur Herstellung von schwerflüchtigen Organopolysiloxanen (P), z. B.

Polydimethylsiloxan mit Me₂HSi-Endgruppen oder SiH-haltigen Polysiloxanen mit Trimethylsilyl-Endgruppen. Vorzugsweise weisen die Organopolysiloxane (P) eine Viskosität von 1 bis 1200 mPas bei 25 °C auf.

Der erste Schritt des erfindungsgemässen Verfahrens wird bevorzugt in Anwesenheit eines in Wasser unlöslichen organischen Lösungsmittels mit einer Dichte von höchstens 0,9 kg/l (L) durchgeführt. Unter einem in Wasser unlöslichen organischen Lösungsmittel (L) sollen im Rahmen dieser Erfindung Lösungsmittel verstanden werden, bei denen die Löslichkeit bei 25°C unter 1 g Lösungsmittel/100 g Wasser liegt, wie z. B. Toluol, Xylol, Tetrachlorkohlenstoff, n-Oktan. Bevorzugt ist Toluol.

Das im ersten Schritt gebildete Teilhydrolysat (T) besteht aus teilweise Cl- und gegebenenfalls OH-endständigen Organopolysiloxanen und cyclischen Siloxanen. Der Gehalt an noch vorhandenen SiCl-Gruppen im Teilhydrolysat (T) beträgt vorzugsweise 0,5 bis 5 Gew.-%, insbesondere 1,0 bis 2 Gew.-%.

Der erste Schritt des erfindungsgemässen Verfahrens wird vorzugsweise bei einer Temperatur von 0 bis 80°C, insbesondere 10 bis 30°C, und einem Druck von 900 bis 1600 hPa durchgeführt.

Das im ersten Schritt anfallende Chlorwasserstoffgas kann direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Im zweiten Schritt wird der Chlorgehalt des Teilhydrolysats (T) mit Wasser vollständig zur Reaktion gebracht. Die dabei entstehende Salzsäure hat vorzugsweise einen HCl-Gehalt von 3 bis 20 Gew.-%, insbesondere 5 bis 10 Gew.-%.

In einer besonderen Ausführungsform des erfindungsgemässen Verfahrens wird im zweiten Schritt gebildete Salzsäure im ersten Schritt als Wasserlieferant eingesetzt. Vorzugsweise werden mindestens 90 %, insbesondere mindestens 95 % der im zweiten Schritt gebildeten Salzsäure im ersten Schritt eingesetzt.

In einer besonders bevorzugten Ausführungsform des erfindungsgemässen Verfahrens wird im zweiten Schritt höchstens so viel Wasser eingesetzt, dass das Wasser der entstehenden Salzsäure im ersten Schritt vollständig umgesetzt wird.

Die Kettenlängen und Viskositäten der erfindungsgemäss hergestellten Organopolysiloxane (P) werden über das Gewichtsverhältnis der eingesetzten Chlorsilan-Gemische gesteuert.

Der zweite Schritt des erfindungsgemässen Verfahrens wird vorzugsweise bei einer Temperatur von 0 bis 100°C, insbesondere 10 bis 60°C, und dem Druck der umgebenden Atmosphäre, also bei 900 bis 1100 hPa, durchgeführt.

In einer bevorzugten Ausführungsform wird das nach dem zweiten Schritt anfallende Hydrolysat (H) mit einem Umlagerungskatalysator versetzt, um den Anteil an schwerer flüchtigen, im wesentlichen linearen Organopolysiloxanen zu erhöhen. Bevorzugt handelt es sich bei diesen Katalysatoren um stark saure Ionenaustauscher, besonders bevorzugt auf Basis Polystyrol und mit Sulfonsäuregruppen funktionalisiert. Bevorzugt wird der Katalysator in einen Rohrreaktor und insbesondere als lose Schüttung gefüllt, er kann aber auch als gepackte Füllung vorliegen.

In einer weiteren bevorzugten Ausführungsform wird das nach dem zweiten Schritt anfallende Hydrolysat (H) in Organopolysiloxane (P) und leichtflüchtiges Organopolysiloxane enthaltendes Gemisch (G) aufgetrennt. Das Gemisch (G) wird vorzugsweise in den ersten Schritt und/oder zweiten Schritt zurückgeführt oder ganz oder teilweise zu schwerer flüchtigen, im wesentlichen linearen Organopolysiloxanen umgelagert.

Die Abtrennung des Gemisches (G) erfolgt bevorzugt durch Destillation, wobei diese besonders bevorzugt in zwei Stufen in Gemische (G1) und (G2) durchgeführt wird. Bei den Gemischen (G), (G1), (G2) handelt es sich überwiegend um kurzkettige lineare und cyclische Organohydrogensiloxane und gegebenenfalls um das Lösungsmittel (L). In einer ersten Destillationsstufe wird vorrangig das gegebenenfalls eingesetzte Lösungsmittel (L) abgetrennt. Dieses kann im ersten oder zweiten Verfahrensschritt wieder zugeführt werden. Die zweite Destillationsstufe dient vorrangig der Abtrennung eines Organohydrogensiloxan-Gemisches, welches vorzugsweise in die Destillation zurückgeführt wird.
Das Abtrennen der Destillate kann zur Gewinnung von cyclischen Organohydrogenpolysiloxanen dienen.

Die erste Destillationsstufe wird vorzugsweise bei einer Temperatur von 50 bis 150°C, insbesondere 60 bis 120°C, und einem Absolutdruck von 50 bis 1100 hPa durchgeführt.

Die zweite Destillationsstufe wird vorzugsweise bei einer Temperatur von 80 bis 200°C, insbesondere 120 bis 160°C, und einem Absolutdruck von 1 bis 30 hPa, durchgeführt.

Vorzugsweise werden die Gemische (G), (G1), (G2) in den ersten Schritt zurückgeführt.

Besonders bevorzugt wird mit den Gemischen (G), (G1), (G2), gegebenenfalls nach Abtrennung des Lösungsmittels (L) eine Umlagerung in Anwesenheit eines Umlagerungskatalysators durchgeführt. Bevorzugt handelt es sich bei den Katalysatoren um die vorstehend beschriebenen beim Hydrolysat (H) einsetzbaren Katalysatoren.

Während der Kontaktzeit werden zum überwiegenden Teil, bevorzugt zu 80 bis 95 Gew.-% des flüchtigen Organohydrogenpolysiloxans, zu schwer flüchtigem, im wesentlichen linearen Organohydrogenpolysiloxan umgelagert. Die Gemische (G), (G1), (G2) enthalten bevorzugt bis zu 60 Gew.-% Lösungsmittel (L), insbesondere ein Gemisch aus den Gemischen (G1) und (G2), besonders bevorzugt jedoch 15 bis 25 % Lösungsmittel (L).

Die Gemische (G), (G1), (G2) können in einem Reaktionsgefäss mit Katalysator kontaktiert werden. Als Reaktionsgefäss können beliebige Reaktionsgefässe, wie Rührkessel und insbesondere Rohrreaktor eingesetzt werden. Die Gemische (G), (G1), (G2) können entweder von oben über die Katalysatorschüttung gegeben oder sie durchströmen mittels Pumpe von unten nach oben die Katalysatorsäule, wobei die Anströmung von unten mittels Pumpe bevorzugt ist.

Entscheidend für den Grad der Umlagerung sind Katalysatormenge, Verweilzeit und Temperatur. Kontaktzeiten von einer Minute bis hundertzwanzig Minuten sind bevorzugt und zwei bis 30 Minuten sind besonders bevorzugt. Die Umlagerung wird bei Temperaturen von bevorzugt -30°C bis +200°C, besonders bevorzugt von 0 bis 30°C, und einem bevorzugten Druck der umgebenden Atmosphäre, also etwa 900 bis 1100 hPa, durchgeführt.

Das erfindungsgemässe Verfahren kann absatzweise, halbkontinuierlich oder vollkontinuierlich durchgeführt werden, wobei bevorzugt die vollkontinuierliche Fahrweise der zwei Schritte und gegebenenfalls der Abtrennung, Bearbeitung und Zuführung der Gemische (G), (G1), (G2) in einem Anlagenverbund zum Einsatz kommt.

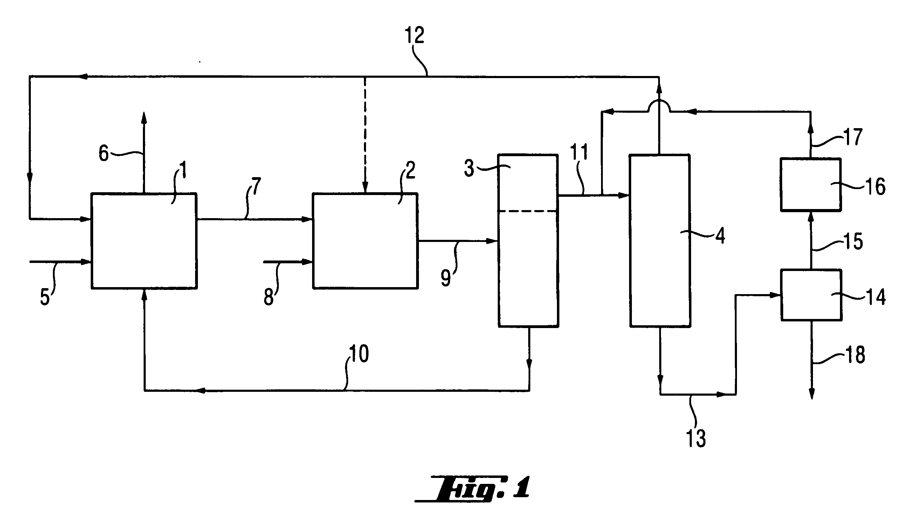

Fig. 1 zeigt eine bevorzugte Ausführungsform des erfindungsgemäßen Verfahrens:

Im ersten Schritt werden in den Loop-Reaktor (1) über Leitung (5) das Chlorsilan-Gemisch, über Leitung (10) Salzsäure und über Leitung (12) das Destillat des Dünnschichtverdampfers (4) eingespeist. Abgeführt wird gasförmiger Chlorwasserstoff über Leitung (6) und das hergestellte Teilhydrolysat (T) über Leitung (7).

Das Teilhydrolysat (T) wird über Leitung (7) und Wasser über Leitung (8) in den Loop-Reaktor (2) dosiert.

Das gesamte Reaktionsgemisch wird danach über Leitung (9) in einen Abscheider (3) eingespeist. Dort wird die Salzsäure als untere Phase abgetrennt und über Leitung (10) in den Loop-Reaktor (1) zurückgeführt. Die obere Phase wird über Leitung (11) in die erste Destillationseinheit (4) eingespeist. Die leichtflüchtigen Bestandteile werden über Leitung (12) in den Loop-Reaktor (1) zurückgeführt. Gegebenenfalls wird ein Teil der leichtflüchtigen Bestandteile von Leitung (12) abgezweigt und in den Loop-Reaktor (2) zurückgeführt. Der Ablauf (13) wird in die zweite Destillationseinheit (14) eingespeist. Die leichtflüchtigen Bestandteile werden über Leitung (15) in den Umlagerungsreaktor (16) dosiert. Der umgelagerte Stoffstrom wird über Leitung (17) in die Destillationseinheit (4) zurückgeführt. Der Ablauf (18) enthält Organohydrogenpolysiloxan.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

Die Bezugsziffern beziehen sich auf Figur 1

### Beispiel 1

In den Loop-Reaktor (1) werden 100 kg/h Methyldichlorsilan, 34 kg/h Dimethyldichlorsilan und 7,0 kg/h Trimethylchlorsilan über Leitung (5), 60 1/h Destillat des Dünnschichtverdampfers (4) (enthält 30 Gew.-% niedrigmolekulare Hydrogenmethylsiloxane und 70 Gew.-% Toluol) über Leitung (12) und Salzsäure aus Abscheider (3) über Leitung (10) bei 30°C eingespeist. Der anfallende Chlorwasserstoff wird gasförmig aus dem Reaktor abgezogen. Das aus dem Loop-Reaktor (1) austretende Teilhydrolysat wird als homogene Phase mit einem Chlor-Gehalt von 15g/kg wird über Leitung (7) in den Loop-Reaktor (2) geführt und dort mit 20 kg/h Wasser vermischt.

Das aus dem Loop-Reaktor (2) austretende Reaktionsgemisch wird über Leitung (9) in den Abscheider (3) eingespeist. Dort wird in die obere, organische Hydrolysatphase und die untere wäßrige Phase, die einer ca. 6 Gew.-%igen Salzsäure entspricht, getrennt. Die untere Phase wird über Leitung (10) in den Loop-Reaktor (1) zurückgeführt. Die organische Hydrolysatphase wird über zwei Destillationsstufen in(4) bei bis zu 160°C und 1 mbar (absolut) ausgeheizt. Der in der zweiten Destillationsstufe (14) anfallende Destillatstrom (15) wird vollständig in den. Umlagerungsreaktor (16), der als von unten angeströmter Wirbelschichtreaktor mit einer Katalysatorschüttung eines sulfonierten Polystyrolharzes ausgeführt ist, eingespeist. Die Umlagerungsreaktion wird bei 20°C und einem Absolutdruck von 1100 hPa durchgeführt.

Das umgelagerte DSV-Kondensat (17) wird wieder in den Destillationsteil der Anlage (4) zurückgespeist.
Der Ablauf (13) enthält lineares Trimethylsilyl-terminiertes Hydrogenmethylpolysiloxan mit Dimethylsilyl-Gruppen (H-Gehalt 1,1%, Viskosität 30 mm²/sec).

### Beispiel 2

In den Loop-Reaktor (1) werden 94 kg/h Dimethyldichlorsilan und 4,0 kg/h Dimethylchlorsilan über Leitung (5), 50 1/h Destillat des Dünnschichtverdampfers (4) über Leitung (12) und Salzsäure aus Abscheider (3) über Leitung (10) eingespeist. Der anfallende Chlorwasserstoff wird gasförmig aus dem Reaktor abgezogen. Das aus dem Loop-Reaktor (1) austretende Teilhydrolysat wird als homogene Phase mit einem Chlor-Gehalt von 20 g/kg über Leitung (7) in den Loop-Reaktor (2) geführt und dort mit 25,0 kg/h Wasser vermischt.

Das aus dem Loop-Reaktor (2) austretende Reaktionsgemisch wird über Leitung (9) in den Abscheider (3) eingespeist. Dort wird in die obere, organische Hydrolysatphase und die untere wäßrige Phase getrennt. Die untere Phase wird über Leitung (10) in den Loop-Reaktor (1) zurückgeführt. Die organische Hydrolysatphase wird über zwei Destillationsstufen in (4) bei bis zu 160°C und 1 mbar (absolut) ausgeheizt. Der in der zweiten Destillationsstufe (14) anfallende Destillatstrom (15) wird vollständig in den Umlagerungsreaktor (16), der als von unten angeströmter Wirbelschichtreaktor mit einer Katalysatorschüttung eines sulfonierten Polystyrolharzes ausgeführt ist, eingespeist. Die Umlagerungsreaktion wird bei 20°C und einem Absolutdruckvon 1100 hPa durchgeführt.
Das umgelagerte DSV-Kondensat wird wieder in den Destillationsteil der Anlage (4) zurückgespeist.
Der Ablauf (13) enthält lineares Hydrogen-terminiertes Dimethylpolysiloxan (H-Gehalt 0,05%, Viskosität 60 mm²/sec).

## Patentansprüche

1. Verfahren zur Herstellung von Diorganosiloxy-Einheiten und Si-H Gruppen aufweisenden linearen Organopolysiloxanen (P), bei dem
in einem ersten Schritt Diorganodichlorsilane (A) und Monochlorsilane (B) und gegebenenfalls Dichlorsilane (C), wobei mindestens die Monochlorsilane (B) oder Dichlorsilane (C) Si-H Gruppen enthalten, mit höchstens 0,5 Mol Wasser je Mol hydrolysierbaren Chlors zu einem Teilhydrolysat (T) und gasförmigem Chlorwasserstoff umgesetzt werden und
in einem zweiten Schritt das Teilhydrolysat (T) zur Entfernung der noch vorhandenen SiC1-Gruppen mit Wasser unter Bildung von Salzsäure behandelt wird, wobei ein die Organopolysiloxane (P) enthaltendes Hydrolysat (H) anfällt.

2. Verfahren nach Anspruch 1, bei dem die Diorganosiloxy-Einheiten und Si-H.Gruppen aufweisenden linearen Organopolysiloxane (P) die allgemeine Formel 1
R₃SiO(SiR₂O)ₘ(SiR¹₂O)ₙSiR₃ (1),
aufweisen, in der
**R** Wasserstoff oder einen gegebenenfalls mit Halogen- oder Cyanoresten substituierten Kohlenwasserstoffrest mit 1 bis 18 Kohlenstoffatomen,
**R**^{**1**} einen gegebenenfalls mit Halogen- oder Cyanoresten substituierten Kohlenwasserstoffrest mit 1 bis 18 Kohlenstoffatomen,
**m** ganzzahlige Werte von 0 bis 1000 und
**n** ganzzahlige Werte von 1 bis 1000 bedeuten, mit der Massgabe, dass mindestens ein Rest R Wasserstoff bedeutet.

3. Verfahren nach Anspruch 1 und 2, bei dem die im ersten Schritt eingesetzten Diorganodichlorsilane (A) die allgemeine Formel 2
R¹₂SiCl₂ (2),
aufweisen, in der **R**^{**1**} die in Anspruch 2 aufgeführten Bedeutungen aufweist.

4. Verfahren nach Anspruch 1 bis 3, bei dem die im ersten Schritt eingesetzten Monochlorsilane (B) die allgemeine Formel 3
R₃SiCl (3),
aufweisen, in der **R** die in Anspruch 2 aufgeführten Bedeutungen aufweist.

5. Verfahren nach Anspruch 1 bis 4, bei dem die im ersten Schritt eingesetzten Dichlorsilane (C) die allgemeine Formel 4
R₂SiCl₂ (4),
aufweisen, in der **R** die in Anspruch 2 aufgeführten Bedeutungen aufweist.

6. Verfahren nach Anspruch 1 bis 5, bei dem im zweiten Schritt gebildete Salzsäure als Wasserlieferant im ersten Schritt eingesetzt wird.

7. Verfahren nach Anspruch 1 bis 6, bei dem der erste Schritt in Anwesenheit eines in Wasser unlöslichen organischen Lösungsmittels mit einer Dichte von höchstens 0,9 kg/l (L) durchgeführt wird.

8. Verfahren nach Anspruch 1 bis 7, bei dem beide Schritte vollkontinuierlich durchgeführt werden.

9. Verfahren nach Anspruch 1 bis 8, bei dem das nach dem zweiten Schritt anfallende Hydrolysat (H) mit einem Umlagerungskatalysator versetzt wird.

10. Verfahren nach Anspruch 1 bis 9, bei dem das nach dem zweiten Schritt anfallende Hydrolysat (H) in Organopolysiloxane (P) und leichtflüchtiges Organopolysiloxane enthaltendes Gemisch (G) aufgetrennt wird und das Gemisch (G) in den ersten Schritt und/oder zweiten Schritt zurückgeführt oder ganz oder teilweise zu schwerer flüchtigen, im wesentlichen linearen Organopolysiloxanen umgelagert wird.

## Claims

1. Process for preparing linear organopolysiloxanes (P) having diorganosiloxy units and Si-H groups, in which, in a first step, diorganodichlorosilanes (A) and monochlorosilanes (B) and optionally dichlorosilanes (C), at least the monochlorosilanes (B) or dichlorosilanes (C) containing Si-H groups, are reacted with at most 0.5 mol of water per mole of hydrolysable chlorine to give a partial hydrolysate (T) and gaseous hydrogen chloride, and, in a second step, the SiCl groups still present in the partial hydrolysate (T) are removed by treating with water to form hydrochloric acid, and a hydrolysate (H) containing the organopolysiloxanes (P) is obtained.

2. Process according to claim 1, in which the linear organopolysiloxanes (P) having the diorganosiloxy units and Si-H groups have the general formula 1
R₃SiO(SiR₂O)ₘ(SiR¹₂O)ₙSiR₃ (1)
in which
**R** is hydrogen or an optionally halogen- or cyano-substituted hydrocarbon radical having from 1 to 18 carbon atoms,
**R**^{**1**} is an optionally halogen- or cyano-substituted hydrocarbon radical having from 1 to 18 carbon atoms,
**m** is an integer from 0 to 1000 and
**n** is an integer from 1 to 1000,
with the proviso that at least one R radical is hydrogen.

3. Process according to claim 1 and 2, in which the diorganodichlorosilanes (A) used in the first step have the general formula 2
R¹₂SiCl₂ (2)
in which **R**^{**1**} is as defined in claim 2.

4. Process according to claim 1 to 3, in which the monochlorosilanes (B) used in the first step have the general formula 3
R₃SiCl (3)
in which **R** is as defined in claim 2.

5. Process according to claim 1 to 4, in which the dichlorosilanes (C) used in the first step have the general formula 4
R₂SiCl₂ (4)
in which **R** is as defined in claim 2.

6. Process according to claim 1 to 5, in which hydrochloric acid formed in the second step is used in the first step as a water source.

7. Process according to claim 1 to 6, in which the first step is carried out in the presence of a water-insoluble organic solvent having a density of at most 0.9 kg/l (S).

8. Process according to claim 1 to 7, in which both steps are carried out fully continuously.

9. Process according to claim 1 to 8, in which the hydrolysate (H) obtained after the second step is admixed with a rearrangement catalyst.

10. Process according to claim 1 to 9, in which the hydrolysate (H) obtained in the second step is separated into organopolysiloxanes (P) and mixture (M) comprising volatile organopolysiloxanes, and the mixture (M) is recycled into the first step and/or second step or rearranged fully or partly to give less volatile, substantially linear organopolysiloxanes.

## Revendications

1. Procédé de préparation d'organopolysiloxanes (P) linéaires présentant des unités diorganosiloxy et des groupements Si-H, dans lequel
dans une première étape, des diorganodichlorosilanes (A) et des monochlorosilanes (B) et le cas échéant des dichlorosilanes (C), au moins les monochlorosilanes (B) ou les dichlorosilanes (C) contenant des groupements Si-H, sont transformés avec au maximum 0,5 mole d'eau par mole de chlore hydrolysable en un hydrolysat partiel (T) et du gaz chlorhydrique et, dans une deuxième étape, l'hydrolysat partiel (T) est traité avec de l'eau pour éliminer les groupements SiCl encore présents avec formation d'acide chlorhydrique, un hydrolysat (H) contenant les organopolysiloxanes (P) étant obtenu.

2. Procédé selon la revendication 1, dans lequel les organopolysiloxanes (P) linéaires présentant des unités diorganosiloxy et des groupements Si-H présentent la formule générale 1
R₃SiO(SiR₂O)ₘ(SiR¹₂O)ₙSiR₃ (1),
dans laquelle
R signifie hydrogène ou un radical hydrocarboné comprenant 1 à 18 atomes de carbone, le cas échéant substitué par des radicaux halogène ou cyano,
R¹ signifie un radical hydrocarboné comprenant 1 à 18 atomes de carbone le cas échéant substitué par des radicaux halogène ou cyano,
m signifie des valeurs entières de 0 à 1 000 et
n signifie des valeurs entières de 1 à 1 000,
à condition qu'au moins un radical R signifie hydrogène.

3. Procédé selon la revendication 1 et 2, dans lequel les diorganodichlorosilanes (A) utilisés dans la première étape présentent la formule générale 2
R¹ ₂SiCl₂ (2),
dans laquelle R¹ présente les significations indiquées dans la revendication 2.

4. Procédé selon la revendication 1 à 3, dans lequel les monochlorosilanes (B) utilisés dans la première étape présentent la formule générale 3
R₃SiCl (3),
dans laquelle R présente les significations indiquées dans la revendication 2.

5. Procédé selon la revendication 1 à 4, dans laquelle les dichlorosilanes (C) utilisés dans la première étape présentent la formule générale 4
R₂SiCl₂ (4),
dans laquelle R présente les significations indiquées dans la revendication 2.

6. Procédé selon la revendication 1 à 5, dans lequel l'acide chlorhydrique formé dans la première étape est utilisé comme fournisseur d'eau dans la première étape.

7. Procédé selon la revendication 1 à 6, dans lequel la première étape est réalisée en présence d'un solvant organique insoluble dans l'eau présentant une densité d'au maximum 0,9 kg/l (L).

8. Procédé selon la revendication 1 à 7, dans lequel les deux étapes sont réalisées de manière complètement continue.

9. Procédé selon la revendication 1 à 8, dans lequel l'hydrolysat (H) obtenu après la deuxième étape est mélangé avec un catalyseur de transposition.

10. Procédé selon la revendication 1 à 9, dans lequel l'hydrolysat (H) obtenu après la deuxième étape est séparé en organopolysiloxanes (P) et en mélange (G) contenant des organopolysiloxanes volatils et le mélange (G) est recyclé dans la première et/ou la deuxième étape ou est transposé totalement ou partiellement en organopolysiloxanes moins volatils, essentiellement linéaires.
